# EUROPÄISCHE PATENTANMELDUNG

(11) **EP 1 225 106 A2**
(43) Veröffentlichungstag der Anmeldung: **24.07.2002**
(21) Anmeldenummer: 02000833.0
(22) Anmeldetag: 15.01.2002
(51) Int. Cl.: B60R 25/00

(54) **Vorrichtung zur Freischaltung und/oder Sperrung von in einem Fahrzeug angeordneten Baugruppen**

(30) Priorität: 19.01.2001 DE 10102420
(71) Anmelder: GRUNDIG Aktiengesellschaft, 90471 Nürnberg (DE)
(72) Erfinder: Kraus, Udo, 90471 Nürnberg (DE)

(57) **Zusammenfassung**

Die Erfindung betrifft eine Vorrichtung zur Freischaltung und/oder Sperrung von in einem Fahrzeug angeordneten Baugruppen. Die Vorrichtung weist einen Datenträger (1) auf, welcher mit einem Speicher (2) versehen ist, der zur Abspeicherung von Freigabe- und/oder Sperrdaten für eine, mehrere oder alle der Baugruppen (6-13) dient. Weiterhin enthält die Vorrichtung eine Datenträgerleseeinheit (3), die zum Lesen der im Speicher des Datenträgers (1) abgespeicherten Daten dient. Die gelesenen Daten werden von einer Steuereinheit (4) zur Ansteuerung der im Kraftfahrzeug angeordneten Baugruppen (6-13) in Abhängigkeit von den gelesenen Freigabe- und/oder Sperrdaten verwendet.

## Beschreibung

Die Erfindung betrifft eine Vorrichtung zur Freischaltung und/oder Sperrung von in einem Fahrzeug angeordneten Baugruppen.

Leihwagenfirmen stehen im allgemeinen eine Vielzahl verschiedener Fahrzeuge zur Verfügung, die sich unter anderem durch ihr Platzangebot, ihre PS-Zahl, die Fahrzeugausstattung, die Art ihrer Kommunikationsgeräte und durch weitere Komfortmerkmale voneinander unterscheiden. Ein Leihwageninteressent, der zu einer derartigen Leihwagenfirma kommt, um sich ein seinen individuellen Vorstellungen entsprechendes Fahrzeug auszuleihen, ist darauf angewiesen, dass die Leihwagenfirma ein derartiges Fahrzeug vorrätig hat. Dies kann in der Praxis in vielen Fällen nicht gewährleistet werden, so dass der Leihwageninteressent sich entweder ein anderes Fahrzeug aussuchen oder sich an eine andere Leihwagenfirma wenden muss.

Die Aufgabe der Erfindung besteht darin, einen Weg aufzuzeigen, wie die vorstehend beschriebene Situation verbessert werden kann.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass für den jeweiligen Benutzer eines Fahrzeugs durch die auf dem Datenträger abgespeicherten Daten bestimmte Funktionen im Fahrzeug individuell freigegeben oder gesperrt werden können.

Dies eröffnet beispielsweise Leihwagenfirmen die Möglichkeit, sich eine Vielzahl von Fahrzeugen mit übereinstimmender Maximalausstattung anzuschaffen und für einen Leihwageninteressenten je nach dessen Interessenlage und Zahlungsbereitschaft bestimmte dieser Funktionen entweder zu sperren oder gegen Bezahlung einer entsprechenden Gebühr freizugeben. Dies erfolgt durch die Ausgabe eines geeignet programmierten Datenträgers, der vom Leihwageninteressenten mit in das Fahrzeug genommen wird. Dort erfolgt ein Auslesen der gespeicherten Daten und eine Ansteuerung der jeweiligen Baugruppe im Sinne einer Freigabe oder Sperrung.

Vorzugsweise sind auf dem Datenträger auch Zeitdaten abgespeichert, die Auskunft über den Zeitpunkt und die Zeitdauer der Freigabe bestimmter Baugruppen geben. Dies hat den Vorteil, dass der Datenträger nach der Rückgabe des Fahrzeugs nicht mehr zurückgegeben werden muss, da er nach dem Ende der Freigabezeit ohnehin seine Gültigkeit verliert.

Zu den freizuschaltenden bzw. zu sperrenden Funktionen bzw. Baugruppen gehören nicht nur Funktionen, die Datenkommunikationsgeräte betreffen, sondern auch Funktionen, die den Fahrkomfort betreffen.

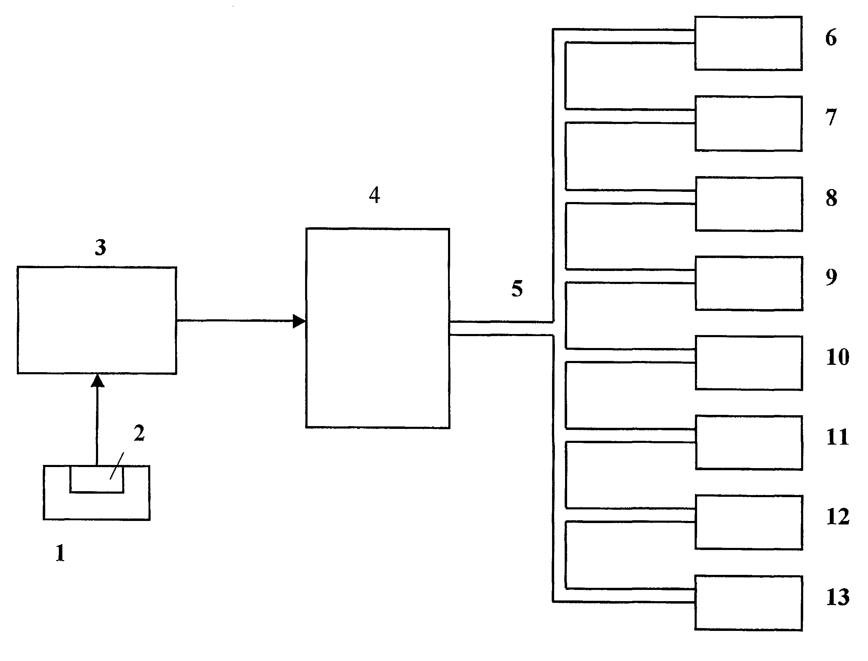

Weitere vorteilhafte Eigenschaften der Erfindung ergeben sich aus der Erläuterung eines Ausführungsbeispiels anhand der Figur. Diese zeigt ein Blockschaltbild einer Vorrichtung zur Freischaltung bzw. Sperrung von in einem Fahrzeug angeordneten Baugruppen.

Bei dem genannten Fahrzeug handelt es sich um ein Leihauto, welches von einem Leihwageninteressenten gegen Entrichtung einer entsprechenden Gebühr ausgeliehen werden kann. Die Höhe dieser Gebühr richtet sich danach, von welchen Funktionen bzw. Baugruppen des Fahrzeugs der Leihwageninteressent Gebrauch machen möchte und von welchen nicht.

Im gezeigten Ausführungsbeispiel gehören zu den im Auto befindlichen Baugruppen ein Fernsehgerät 6, ein Radiogerät 7, ein Aufzeichnungsgerät 8, ein DVD-Spieler 9, ein Telefon 10, welches gegebenenfalls einen Internetzugang aufweist, ein Diktiergerät 11, eine Klimaanlage 12 und ein Navigationsgerät 13.

Bezüglich des Radiogerätes 7 hat der Leihwageninteressent die Möglichkeit, entweder nur auf Sendebeiträge der öffentlich rechtlichen Sendeanstalten zuzugreifen oder - bei Entrichtung einer entsprechend höheren Leihgebühr - auch auf gebührenpflichtige Sendebeiträge, die verschlüsselt übertragen werden und vor ihrer Wiedergabe mittels eines im Radiogerät enthaltenen Decoders decodiert werden müssen.

Bezüglich des Fernsehgerätes 6, des Aufzeichnungsgerätes 8, des DVD-Spielers 9, des Telefons 10, des Diktiergerätes 11, der Klimaanlage 12 und des Navigationsgerätes 13 hat der Leihwageninteressent die Möglichkeit, auf die Nutzung zu verzichten oder - gegen Entrichtung einer entsprechend höheren Leihgebühr - deren Nutzung vorzunehmen, wobei er für jedes dieser Geräte die Entscheidung individuell treffen kann.

Hat sich der Leihwageninteressent bezüglich einer Nutzung der genannten Geräte festgelegt, dann programmiert der Leihwagenvermieter den Speicher 2 eines mobilen Datenträgers 1 derart, dass im Speicher 2 Freigabe- bzw. Sperrdaten für jede der oben genannten Funktionen bzw. Baugruppen nichtflüchtig abgespeichert sind.

Weiterhin werden im Speicher 2 des Datenträgers 1, bei welchem es sich vorzugsweise um eine Datenträgerkarte handelt, auch Zeitdaten abgespeichert, die Informationen über den Zeitpunkt und die Zeitdauer der Freigabe bzw. Sperrung der oben genannten Geräte enthalten.

Diese programmierte Datenträgerkarte wird dem Leihwageninteressenten nach Entrichtung der Leihgebühr ausgehändigt und von diesem mit in das Leihauto genommen.

Dort wird die genannte Datenträgerkarte 1 in eine Datenträgerleseeinheit 3 eingeschoben, in welcher ein Auslesen der im Speicher 2 der Datenträgerkarte 1 abgespeicherten Freigabe- bzw. Sperrdaten erfolgt. Die gelesenen Freigabebzw. Sperrdaten werden einer Steuereinheit 4 zugeführt, die in Abhängigkeit von den gelesenen Daten Steuersignale für die Baugruppen 6-13 des Fahrzeugs generiert und diesen über einen Bus 5 zuführt.

Hat sich der Leihwageninteressent beispielsweise dafür entschieden, auf eine Nutzung gebührenpflichtiger Radiokanäle sowie auf eine Nutzung des Fernsehgerätes 6, des Aufzeichnungsgerätes 8, des DVD-Spielers 9 und des Diktiergerätes 11 zu verzichten und eine Nutzung der Klimaanlage 12, des Navigationsgerätes 13 und des Telefons 10 vorzunehmen, dann erzeugt die Steuereinheit 4 in Abhängigkeit von den entsprechenden Daten auf der Datenträgerkarte Sperrsignale, die eine Wiedergabe von Signalen aus gebührenpflichtigen Radiokanälen, eine Nutzung des Aufzeichnungsgerätes 8, des DVD-Spielers 9 und des Diktiergerätes 11 verhindern, sowie Freigabesignale, die eine Nutzung der Klimaanlage 12, des Navigationsgerätes 13 und des Telefons 10 freigeben.

Gemäß der Erfindung besteht nach alledem die Möglichkeit, mittels eines geeignet programmierten Datenträgers den Insassen eines Fahrzeugs einen Zugriff auf dort vorhandene Funktionen bzw. Baugruppen individuell zu erlauben oder zu sperren. Bei den genannten Baugruppen kann es sich um Datenkommunikationsgeräte und einzelne Funktionen derselben als auch um den Fahrkomfort beeinflussende Baugruppen des Fahrzeugs handeln.

Gemäß einer vorteilhaften Weiterbildung der Erfindung ist auf der Datenträgerkarte auch ein Mikrocomputer enthalten. Dieser steht während des Gebrauchs des Fahrzeugs in Verbindung mit einem fahrzeugseitigen Mikrocomputer, um Daten über die tatsächliche Nutzung der oben genannten Baugruppen bzw. Geräte zu erfassen und auf der Datenträgerkarte abzuspeichern. Wird die Datenträgerkarte nach Rückgabe des Fahrzeugs ausgewertet, dann können Rückschlüsse auf den tatsächlichen Bedarf der genannten Geräte gezogen werden und zukünftige Fahrzeuge entsprechend ausgestattet werden.

## Patentansprüche

1. Vorrichtung zur Freischaltung und/oder Sperrung von in einem Fahrzeug angeordneten Baugruppen, mit
einem Datenträger (1), welcher einen Speicher (2) aufweist, der zur Abspeicherung von Freigabe- und/oder Sperrdaten für eine, mehrere oder alle der Baugruppen (6-13) dient, einer Datenträgerleseeinheit (3), die zum Lesen der im Speicher des Datenträgers abgespeicherten Freigabe- und/oder Sperrdaten dient, eine mit der Datenträgerleseeinheit verbundenen Steuereinheit (4) zur Ansteuerung der im Kraftfahrzeug angeordneten Baugruppen (6-13) in Abhängigkeit von den gelesenen Freigabe- und/oder Sperrdaten und der Datenträger (1) zur Abspeicherung von Zeitdaten dient, die Informationen über den Zeitpunkt und die Dauer der Freigabe einer, mehrerer oder aller der Baugruppen (6-13) enthalten.

2. Vorrichtung nach Anspruch 1,
**dadurch gekennzeichnet, dass**
der Datenträger (1) eine programmierbare Datenträgerkarte ist.

3. Vorrichtung nach Anspruch 1 oder 2,
**dadurch gekennzeichnet, dass**
zu den Baugruppen den Fahrkomfort des Fahrzeugs beeinflussende Baugruppen gehören.

4. Vorrichtung nach Anspruch 3,
**dadurch gekennzeichnet, dass**
eine den Fahrkomfort des Fahrzeugs beeinflussende Baugruppe eine Klimaanlage (12) ist oder zu den Baugruppen Datenkommunikationsgeräte gehören und/oder ein Datenkommunikationsgerät ein Navigationsgerät (13) und/oder ein Telefon (10) ist.

5. Vorrichtung nach Anspruch 4,
**dadurch gekennzeichnet, dass**
das Telefon ein Telefon mit Internetzugang ist und der Internetzugang mittels der auf dem Datenträger abgespeicherten Daten freigebbar oder sperrbar ist.

6. Vorrichtung nach einem der Ansprüche 4 oder 5,
**dadurch gekennzeichnet, dass**
ein Datenkommunikationsgerät ein Autoradio (7) oder ein Fernsehgerät (6) ist.

7. Vorrichtung nach Anspruch 6,
**dadurch gekennzeichnet, dass**
mittels der auf dem Datenträger abgespeicherten Daten Empfangskanäle selektiv freigebbar oder sperrbar sind.

8. Vorrichtung nach einem der Ansprüche 3 bis 7,
**dadurch gekennzeichnet, dass**
ein Datenkommunikationsgerät ein Aufzeichnungsgerät (8) ist und mittels der auf dem Datenträger abgespeicherten Daten der Aufzeichnungsvorgang freigebbar oder sperrbar ist.

9. Vorrichtung nach einem der Ansprüche 3 bis 8,
**dadurch gekennzeichnet, dass**
ein Datenkommunikationsgerät ein Wiedergabegerät (9) ist und mittels der auf dem Datenträger abgespeicherten Daten der Wiedergabevorgang freigebbar oder sperrbar ist.

10. Vorrichtung nach einem der Ansprüche 3 - 9,
**dadurch gekennzeichnet, dass**
ein Datenkommunikationsgerät ein Diktiergerät (11) ist, dessen Funktionen mittels der auf den Datenträger abgespeicherten Daten freigebbar oder sperrbar sind.

11. Vorrichtung nach einem der vorhergehenden Ansprüche,
**dadurch gekennzeichnet, dass**
das Fahrzeug ein Leihfahrzeug ist.

12. Vorrichtung nach einem der vorhergehenden Ansprüche,
**dadurch gekennzeichnet, dass**
der Datenträger käuflich erwerbbar ist.
